# EUROPÄISCHE PATENTSCHRIFT

(11) **EP 1 662 236 B1**
(45) Veröffentlichungstag und Bekanntmachung des Hinweises auf die Patenterteilung: **24.07.2013**
(21) Anmeldenummer: 05019474.5
(22) Anmeldetag: 07.09.2005
(51) Int. Cl.: G01F 1/84

(54) **Coriolis-Massendurchflussmessgerät und Verfahren zur Herstellung eines Messrohrs für ein Coriolis-Massendurchflussmessgerät**
Coriolis-mass flow meter and method of manufacturing a measuring tube for a Coriolis-mass flow meter
Débitmètre massique Coriolis et methode pour fabriquer un tube de mesure pour un debitmètre massique Coriolis

(30) Priorität: 25.11.2004 DE 102004057088
(43) Veröffentlichungstag der Anmeldung: 31.05.2006
(73) Patentinhaber: Krohne AG, 4019 Basel (CH)
(72) Erfinder: Hussain, Yousif, Northamton Northamtonshire (GB); Rolph, Chris, Northamton Northamtonshire (GB); Harrison, Neil, Northamton Northamtonshire (GB)
(74) Vertreter: Gesthuysen Patent- und Rechtsanwälte

(56) Entgegenhaltungen:
- EP-A- 0 363 887
- EP-A- 0 415 207
- DE-A1- 4 232 526
- US-B1- 6 336 370

## Beschreibung

Die Erfindung betrifft ein Coriolis-Massendurchflußmeßgerät, mit einem zu Schwingungen anregbaren Meßrohr aus Polyetheretherketon sowie ein Verfahren zur Herstellung eines Meßrohrs für ein Coriolis-Massendurchflußmeßgerät.

Coriolis-Massendurchflußmeßgeräte sind aus der Praxis gut bekannt. Bei dieser Art von Massendurchflußmeßgeräten wird wenigstens ein Meßrohr zu Schwingungen angeregt, so daß in einem durch das Meßrohr fließenden Medium Coriolis-Kräfte erzeugt werden. Diese Coriolis-Kräfte bzw. dadurch generierte Auslenkungen des Meßrohrs werden erfaßt, um damit auf den Massendurchfluß rückschließen zu können, z. B. über die Phasenverschiebung der Auslenkungen des Meßrohrs an seiner Einlauf- bzw. Auslaufseite. Diesbezüglich wird allgemein verwiesen auf "K. W. Bonfig, Technische Durchflußmessung, 3. Auflage, 2002, Vulkan-Verlag GmbH, Seiten 215 - 226".

Meßrohre für Coriolis-Massendurchflußmeßgeräte werden häufig aus metallischen Materialien hergestellt, wie Edelstahl, Titan, Tantal u.a. Es sind jedoch auch Ansätze bekannt, nichtmetallische Materialien für das Meßrohr eines Coriolis-Massendurchflußmeßgeräts zu verwenden. Gemäß der DE 41 19 396 C1 ist beispielsweise vorgesehen, daß das Meßrohr eines Coriolis-Massendurchflußmeßgeräts aus durch Pyrolyse unschmelzbarer Kunststoffe gewonnenem Kohlenstoff besteht. Ferner ist aus der DE 100 37 784 A1 ein Coriolis-Massendurchflußmeßgerät mit einem Meßrohr aus Keramik bekannt.

Aus der US 6,336,370 B1 ist ein Coriolis-Massendurchflußmeßgerät bekannt, bei dem das Meßrohr aus Polytetrafluorethylen, aus Perfluor-Alkoxy-Polymer oder aus Polyetheretherketon bestehen kann (US 6,336,370 B1, Spalte 4, Zeilen 30 bis 34). Einzelheiten über die Realisierung des Meßrohres dieses bekannten Coriolis-Massendurchflußmeßgeräts können der US 6,336,370 B1 nicht entnommen werden.

Aus der DE 42 32 526 A 1 ist eine Vorrichtung zur Messung kleiner Flüssigkeitsströme mit Hochfrequenz-Ultraschall bekannt. Für eine Ausführungsform dieser Vorrichtung, bei der ein Meßrohr aus Stahl verwendet ist, kann die Innenwand des Meßrohrs mit einem Material beschichtet sein, das eine Oberflächenenergie von weniger als 200 mN/m aufweist. Ein solches Material kann beispielsweise auch Polyetheretherketon sein.

Die EP 415 207 A2 offenbart allgemein ein Verfahren zur Herstellung eines Hohlkörpers aus faserverstärktem thermoplastischem Kunststoff, beispielsweise aus Polyetheretherketon.

Aus der EP 0 363 887 A2 ist es bekannt, aus faserverstärktem Kohlenstoff Hohlkörper herzustellen, wobei Streifen aus faserverstärktem Kohlenstoff um einen Wickeldorn gewickelt werden, wobei die Orientierung des faserförmigen Materials zur Längsrichtung des Hohlkörpers unterschiedlich sein kann.

Coriolis-Massendurchflußmeßgeräte mit einem Meßrohr aus einem nichtmetallischen Werkstoff können unter anderem deshalb vorteilhaft sein, da sie auch zur Durchflußmessung bei chemisch aggressiven Medien einsetzbar sind, also eine hohe Korrosionsbeständigkeit aufweisen.

Es ist die Aufgabe der Erfindung, ein Coriolis-Massendurchflußmeßgerät anzugeben, das bei chemisch aggressiven Medien eingesetzt werden kann, wobei gleichzeitig eine optimale Anpassung der Parameter des Coriolis-Massendurchflußmeßgeräts, wie Temperatur- und Druckbeständigkeit, an die jeweilige Anwendung ermöglicht wird, und ein Verfahren zur Herstellung eines Meßrohrs für ein solches Coriolis-Massendurchflußmeßgerät anzugeben.

Ausgehend von dem eingangs beschriebenen Coriolis-Massendurchflußmeßgerät ist die der Erfindung zugrundeliegende Aufgabe dadurch gelöst, daß das für die Wand des Meßrohrs verwendete Polyetheretherketon faserverstärkt ist und die Wand mit einer Innenbeschichtung aus reinem Polyetheretherketon versehen ist.

Die Erfindung sieht also die Kombination von Polyetheretherketon (PEEK) in faserverstärkter Form mit reinem Polyetheretherketon als Innenbeschichtung vor, wobei in diesem Zusammenhang "rein" bedeuten soll, daß Polyetheretherketon als solches, also ohne Faserverstärkung, vorgesehen ist. Als ein Hinweis auf einen besonderen Reinheitsgrad ist die Bezeichnung "rein" vorliegend nicht gemeint, so daß zwar keine Faserverstärkungen in dem reinen PEEK vorgesehen sein sollen, die Hinzufügung von anderem Material jedoch nicht ausgeschlossen ist. Gemäß einer bevorzugten Weiterbildung der Erfindung ist jedoch vorgesehen, daß als "reines" PEEK praktisch zusatzfreies PEEK verwendet wird, um eine hohe Korrosionsbeständigkeit der Innenbeschichtung zu gewährleisten.

Bezüglich des faserverstärkten PEEKs kann also grundsätzlich ein derartiges Fasermaterial verwendet werden, das dem PEEK ohne Orientierung beigemischt ist. Gemäß einer bevorzugten Weiterbildung der Erfindung ist jedoch vorgesehen, daß die zur Verstärkung vorgesehenen Fasern im PEEK wenigstens eine vorbestimmte Orientierung aufweisen. Dabei ist es vorteilhaft, wenn die Fasern in Längsrichtung des Meßrohres und/oder helixförmig, vorzugsweise doppelhelixförmig, verlaufen.

Zur Verstärkung der Polyetheretherketons können verschiedene Fasermaterialien verwendet werden. Vorzugsweise wird graphitfaserverstärktes Polyetheretherketon verwendet.

Grundsätzlich ist es möglich, faserverstärktes Polyetheretherketon bzw. reines Polyetheretherketon nur teilweise für das Meßrohr zu verwenden. Vorzugsweise ist jedoch die Innenfläche der aus faserverstärktem Polyetheretherketon bestehenden Wand vollständig mit der Innenbeschichtung aus reinem Polyetheretherketon versehen.

Im übrigen ist eine besonders bevorzugte Ausführungsform des erfindungsgemäßen Coriolis-Massendurchflußmeßgeräts dadurch gekennzeichnet, daß die Wand des Meßrohrs aus faserverstärktem Polyetheretherketon oder/und die Innenbeschichtung aus reinem Polyetheretherketon gewickelt ist und/oder daß die Wand des Meßrohrs aus faserverstärktem Polyetheretherketon an zu verstärkenden Stellen eine größere Wandstärke aufweist als an den anderen Stellen. Diese Verstärkung kann dadurch erreicht werden, daß bei der Herstellung der Wand des Meßrohrs zusätzliche Wicklungen bzw. Schichten des faserverstärkten Polyetheretherketons aufgebracht werden.

Der Übergang von dem faserverstärktem Polyetheretherketon auf die Innenbeschichtung aus reinem Polyetheretherketon kann grundsätzlich beliebig sein. Vorzugsweise weisen die Wand aus faserverstärktem Polyetheretherketon und die Innenbeschichtung aus reinem Polyetheretherketon eine durch Tempern hergestellte Verbindung auf.

Aufgabe der Erfindung ist, wie eingangs ausgeführt, auch die Angabe eines Verfahrens zur Herstellung eines Meßrohrs für das zuvor beschriebene Coriolis-Massendurchflußmeßgerät. Dieses Verfahren ist erfingdungsgemäß zunächst und im wesentlichen dadurch gekennzeichnet, daß wenigstens ein Streifen aus reinem Polyetheretherketon auf einen Wickeldom aufgewickelt wird und das reine Polyetheretherketon mit wenigstens einer Schicht aus einem faserverstärkten Polyetheretherketon umwickelt wird. Dabei wird vorzugsweise, wie weiter oben bereits ausgeführt, graphitfaserverstärktes Polyetheretherketon verwendet.

Wie ebenfalls ausgeführt, kann grundsätzlich ein solches faserverstärktes Polyetheretherketon verwendet werden, bei dem die zur Verstärkung vorgesehenen Fasern statistisch orientiert sind. Vorzugsweise wird jedoch faserverstärktes Polyetheretherketon verwendet, dessen zur Verstärkung vorgesehene Fasern in wenigstens einer vorbestimmten Richtung orientiert sind. Dabei empfiehlt es sich, die Fasern in Längsrichtung des Meßrohres und/oder helixförmig, vorzugsweise doppelhelixförmig, verlaufen zu lassen. Auf diese Weise wird ein Meßrohr erzielt, das hoch druckbeständig ist und eine moderate Temperaturausdehnung aufweist.

Wie bereits ausgeführt, kann bei einer bevorzugten Ausführungsform des erfindungsgemäßen Coriolis-Massendurchflußmeßgeräts die Wand des Meßrohrs aus faserverstärktem Polyetheretherketon an zu verstärkenden Stellen eine größere Wandstärke aufweisen als an den anderen Stellen. Diese verstärkten Stellen des Meßrohrs können z.B. zur Anbringung zusätzlicher Komponenten an das Meßrohr oder zur Befestigung des Meßrohrs in einem äußeren Rohrleitungssystem verwendet werden.

Im übrigen kann es sich empfehlen, bei dem erfindungsgemäßen Coriolis-Massendurchflußmeßgerät einander benachbarte Windungen des reinen Polyetheretherketons einander teilweise überlappend zu wickeln. Dabei können auch die Überlappungen durch Erwärmen, vorzugsweise unter erhöhtem Druck, miteinander verbunden werden.

Grundsätzlich ist es nicht unbedingt erforderlich, die Außenfläche des auf den Wickeldorn aufgewickelten reinen Polyetheretherketons vor der Umwicklung mit dem faserverstärkten Polyetheretherketon zu behandeln. Es empfiehlt sich jedoch, die Außenfläche des auf den Wickeldorn aufgewickelten reinen Polyetheretherketons vor der Umwicklung mit dem faserverstärkten Polyetheretherketon anzuätzen, vorzugsweise chemisch anzuätzen.

Im übrigen empfiehlt es sich, worauf bereits hingewiesen worden ist, das Meßrohr mit dem von dem faserverstärkten Polyetheretherketon umwickelten reinen Polyetheretherketon zu tempern, also einer Wärmebehandlung auszusetzen. Vorzugsweise erfolgt das Tempern bei einer Temperatur zwischen 80 und 120 °C, insbesondere bei einer Temperatur von etwa 100 °C. Diese Temperaturbehandlung kann über eine Zeitdauer von drei bis fünf Stunden gehen, vorzugsweise über eine Zeitdauer von etwa vier Stunden. Die zuvor beschriebene Temperaturbehandlung kann ausreichend sein. Es kann sich jedoch auch empfehlen, der zuvor beschriebenen Temperaturbehandlung ein weiteres Tempern bei einer niedrigeren Temperatur anzuschließen, vorzugsweise bei einer Temperatur zwischen 50 und 80 °C, insbesondere bei einer Temperatur von etwa 60 °C. Dieses Tempern bei der niedrigeren Temperatur erfolgt vorzugsweise auch wieder für eine Zeitdauer von drei bis fünf Stunden, vorzugsweise für eine Zeitdauer von vier Stunden.

Für das erfindungsgemäße Coriolis-Massendurchflußmeßgerät kann die durch Wickeln erzielte Form des Meßrohrs schon ohne weiteres verwendet werden. Es können jedoch Anpassungen des Meßrohrs, insbesondere an den durch zusätzliche Wicklungen mit faserverstärktem Polyetheretherketon verstärkten Stellen dadurch erfolgen, daß das Meßrohr mechanisch bearbeitet wird, z. B. durch spanabhebende Verfahren.

Im einzelnen gibt es nun verschiedene Möglichkeiten, das erfindungsgemäße Coriolis-Massendurchflußmeßgerät sowie das erfindungsgemäße Verfahren zur Herstellung eines Meßrohrs für ein Coriolis-Massendurchflußmeßgerät auszugestalten und weiterzubilden. Dazu wird auf die den abhängigen Patentansprüchen nachgeordneten Patentansprüche sowie auf die nachfolgende detaillierte Beschreibung eines bevorzugten Ausführungsbeispiels der Erfmdung unter Bezugnahme auf die Zeichnung verwiesen. In der Zeichnung zeigt
- Fig. 1: schematisch ein Coriolis-Massendurchflußmeßgerät gemäß einem bevorzugten Ausführungsbeispiel der Erfindung in einem Längsschnitt und
- Fig. 2: schematisch das Meßrohr des Coriolis-Massendurchflußmeßgeräts gemäß dem aus Fig. 1 ersichtlichen bevorzugten Ausführungsbeispiel der Erfindung in einem Querschnitt.

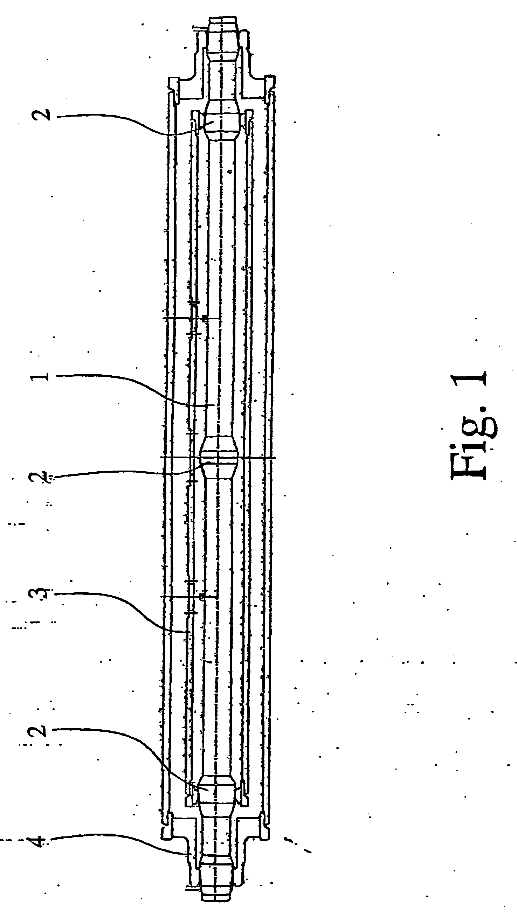

Aus Fig. 1 ist ein Coriolis-Massendurchflußmeßgerät gemäß einem bevorzugten Ausführungsbeispiel der Erfindung ersichtlich, dessen Meßrohr 1 wie im folgenden beschrieben hergestellt wird:
Ein nicht dargestellter Wickeldorn mit einem Durchmesser von 25,4 mm wird mit einem Filmstreifen aus reinem PEEK mit einer Dicke von 0,05 mm mit einer jeweiligen seitlichen Überlappung von 5 mm überwickelt. Die Filmstreifen werden dann an ihren Überlappungen miteinander verbunden, indem sie unter Druck erwärmt werden. Danach wird die Außenfläche des auf den Wikkeldom aufgewickelten reinen Polyetheretherketons chemisch geätzt, und zwar unter Verwendung einer chromsäurebasierten Lösung, um die Verbindung mit der im folgenden aufzuwickelnden Schicht aus faserverstärktem PEEK zu verbessern.

Nach dem chemischen Ätzen der Außenfläche des auf den Wickeldorn aufgewickelten reinen Polyetheretherketons werden zwei Lagen von graphitfaserverstärktem Polyetheretherketon mit einer jeweiligen Dicke von 0,125 mm auf das reine PEEK aufgewickelt. Bei dem graphitfaserverstärktem PEEK wird ein derartiges Material verwendet, bei dem die Graphitfasern in eine vorbestimmte Richtung orientiert sind. Die beiden Schichten des graphitfaserverstärkten PEEK werden dabei derart aufgewickelt, daß die Orientierung der Graphitfasern der Längsrichtung des Meßrohrs 1 entspricht. Nachfolgend werden zwei weitere Schichten von graphitfaserverstärktem PEEK mit einer jeweiligen Dicke von 0,125 mm aufgebracht, und zwar derart, daß die Orientierung der Graphitfasern relativ zur Längsrichtung des Meßrohrs 1 +82,5° bzw. -82,5° beträgt. Damit verlaufen die Graphitfasern im graphitfaserverstärktem PEEK also praktisch doppelhelixförmig um das Meßrohr 1 herum. Über die Orientierung der Richtung der zur Verstärkung des PEEK vorgesehenen Fasern können die Dynamik, die thermischen Eigenschaften und die Druckbeständigkeit des Meßrohrs 1 bestimmt werden. Insgesamt ergibt sich damit eine Gesamtwandstärke der Wand 5 des Meßrohrs 1 von 0,5 mm zuzüglich der Wandstärke der Innenbeschichtung 6 von 0,05 mm.

An vorbestimmten, zu verstärkenden Stellen 2 des Meßrohrs 1 werden weitere Schichten von graphitfaserverstärktem PEEK aufgebracht, wie aus Fig. 1 ersichtlich. Die verstärkten Stellen 2 dienen zum Anbringen weiterer Einrichtungen des Coriolis-Massendurchflußmeßgeräts wie eines Innenzylinders 3 bzw. zur Befestigung des Meßrohrs 1 in einem Gehäuse 4 für das Coriolis-Massendurchflußmeßgerät. Wie weiterhin aus Fig. 1 ersichtlich, werden die zu verstärkenden Stellen 2 darüber hinaus mechanisch bearbeitet, um konisch verlaufende Flächen zu erzielen.

Im Anschluß daran wird das Meßrohr 1 getempert, und zwar bei 100 °C für vier Stunden und anschließend bei einer Temperatur von 60 °C für weitere vier Stunden.

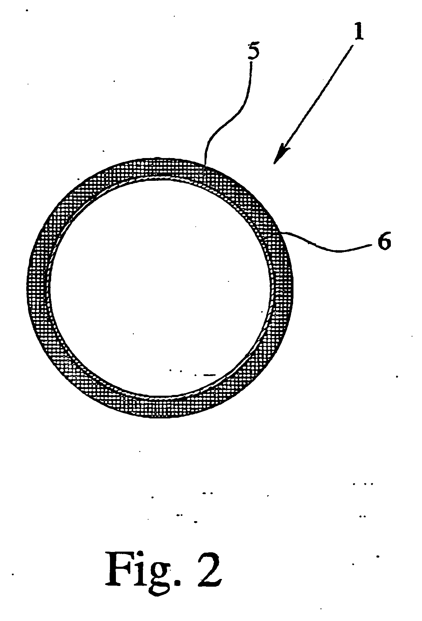

Insgesamt wird damit ein Meßrohr 1 für ein Coriolis-Massendurchflußmeßgerät mit einer Länge von 620 mm, einem Innendurchmesser von 25,4 mm und einem Außendurchmesser von ca. 26,4 mm erzielt, das einen Aufbau aufweist, wie nochmals in Fig. 2 schematisch und nicht größenproportional als Schnitt durch das Meßrohr 1 außerhalb einer verstärkten Stelle 2 dargestellt. Durch das Tempern ist es zu einer Verbindung sowohl der Innenbeschichtung 6 mit der Wand 5 als auch der einzelnen Schichten der Wand 5 aus faserverstärktem PEEK selbst gekommen.

Eine Testmessung mit das Meßrohr 1 durchströmendem Wasser hat eine Eigenfrequenz für den ersten Mode des Meßrohrs 1 zu etwa 192 Hz ergeben, so daß das derart hergestellte Meßrohr 1 für die Verwendung in einem Coriolis-Massendurchflußmeßgerät geeignet ist.

## Patentansprüche

1. Coriolis-Massendurchflußmeßgerät, mit einem zu Schwingungen anregbaren Meßrohr (1) aus Polyetheretherketon, **dadurch gekennzeichnet, daß** die Wand (5) des Meßrohrs (1) aus faserverstärktem Polyetheretherketon besteht und die Wand (5) des Meßrohrs (1) einer Innenbeschichtung (6) aus reinem Polyetheretherketon versehen ist.

2. Coriolis-Massendurchflußmeßgerät nach Anspruch 1, **dadurch gekennzeichnet, daß** die Fasern in Längsrichtung des Meßrohrs (1) und/oder helixförmig, vorzugsweise doppelhelixförmig, verlaufen.

3. Coriolis-Massendurchflußmeßgerät nach Anspruch 1 oder 2, **dadurch gekennzeichnet, daß** graphitfaserverstärktes Polyetheretherketon verwendet ist.

4. Coriolis-Massendurchflußmeßgerät nach einem der Ansprüche 1 bis 3 **dadurch gekennzeichnet, daß** die Innenfläche der Wand (5) des Meßrohrs (1) vollständig mit der Innenbeschichtung (6) aus reinem Polyetheretherketon versehen ist.

5. Coriolis-Massendurchflußmeßgerät nach einem der Ansprüche 1 bis 4, **dadurch gekennzeichnet, daß** die Wand (5) des Meßrohrs (1) aus faserverstärktem Polyetheretherketon an zu verstärkenden Stellen (2) eine größere Wandstärke aufweist als an den anderen Stellen.

6. Verfahren zur Herstellung eines Meßrohrs (1) für ein Coriolis-Massendurchflußmeßgerät, **dadurch gekennzeichnet, daß** wenigstens ein Streifen aus reinem Polyetheretherketon auf einen Wickeldorn aufgewickelt wird und das reine Polyetheretherketon mit wenigstens einer Schicht aus einem faserverstärkten Polyetheretherketon umwickelt wird.

7. Verfahren nach Anspruch 6, **dadurch gekennzeichnet, daß** die Fasern in Längsrichtung des Meßrohres (1) und/oder helixförmig, vorzugsweise doppelhelixförmig, orientiert werden.

8. Verfahren nach Anspruch 6 oder 7, **dadurch gekennzeichnet, daß** das Meßrohr (1) mit dem von dem faserverstärkten Polyetheretherketon umwikkelten reinen Polyetheretherketon getempert wird.

## Claims

1. Coriolis mass flowmeter having a measuring tube (1) of polyether ether ketone that can be excited to oscillation, **characterized in that** the wall (5) of the measuring tube (1) consists of fiber-reinforced polyether ether ketone and that the wall (5) of the measuring tube (1) is provided with an internal coating (6) made of pure polyether ether ketone.

2. Coriolis mass flowmeter according to claim 1, **characterized in that** the fibers extend in the lengthwise direction of the measuring tube (1) and/or in a helix shape, preferably in a double helix shape.

3. Coriolis mass flowmeter according to claim 1 or 2, **characterized in that** graphite fiber-reinforced polyether ether ketone is used.

4. Coriolis mass flowmeter according to any one of claims 1 to 3, **characterized in that** the inner surface of the wall (5) of the measuring tube (1) is completely provided with the internal coating (6) made of pure polyether ether ketone.

5. Coriolis mass flowmeter according to any one of claims 1 to 4, **characterized in that** the wall (5) of the measuring tube (1) of fiber-reinforced polyether ether ketone has a greater wall thickness at locations (2) to be reinforced than at other locations.

6. Method for manufacturing a measuring tube (1) for a Coriolis mass flowmeter, **characterized in that** at least one strip of pure polyether ether ketone is wound on a mandrel and the pure polyether ether ketone is wrapped with at least one layer of a fiber-reinforced polyether ether ketone.

7. Method according to claim 6, **characterized in that** the fibers are oriented in the lengthwise direction of the measuring tube (1) and/or are helix shaped, preferably double helix shaped.

8. Method according to claim 6 or 7, **characterized in that** the measuring tube (1) with the pure polyether ether ketone wound around the fiber-reinforced polyether ether ketone is tempered.

## Revendications

1. Débitmètre massique à effet Coriolis muni d'un tube de mesure (1) en poly-éther-éther-cétone pouvant être excité en oscillations, **caractérisé en ce que** la paroi (5) du tube de mesure (1) se compose de poly-éther-éther-cétone renforcé par des fibres et la paroi (5) du tube de mesure (1) est munie d'un revêtement intérieur (6) en poly-éther-éther-cétone pur.

2. Débitmètre massique à effet Coriolis selon la revendication 1, **caractérisé en ce que** les fibres s'étendent dans le sens longitudinal du tube de mesure (1) et/ou en forme d'hélice, de préférence en forme de double hélice.

3. Débitmètre massique à effet Coriolis selon la revendication 1 ou 2, **caractérisé en ce que** du poly-éther-éther-cétone renforcé par des fibres en graphite est utilisé.

4. Débitmètre massique à effet Coriolis selon l'une des revendications 1 à 3, **caractérisé en ce que** la surface intérieure de la paroi (5) du tube de mesure (1) est entièrement munie du revêtement intérieur (6) en poly-éther-éther-cétone pur.

5. Débitmètre massique à effet Coriolis selon l'une des revendications 1 à 4, **caractérisé en ce que** la paroi (5) du tube de mesure (1) en poly-éther-éther-cétone renforcé par des fibres présente aux endroits (2) à renforcer une épaisseur de paroi supérieure à celles aux autres endroits.

6. Procédé de fabrication d'un tube de mesure (1) pour un débitmètre massique à effet Coriolis, **caractérisé en ce qu'**au moins une bande en poly-éther-éther-cétone pur est enroulée sur un mandrin de bobinage et le poly-éther-éther-cétone pur est enrobé d'au moins une couche d'un poly-éther-éther-cétone renforcé par des fibres.

7. Procédé selon la revendication 6, **caractérisé en ce que** les fibres sont orientées dans le sens longitudinal du tube de mesure (1) et/ou en forme d'hélice, de préférence en forme de double hélice.

8. Procédé selon la revendication 6 ou 7, **caractérisé en ce que** le tube de mesure (1) est attrempé avec le poly-éther-éther-cétone pur enrobé par le poly-éther-éther-cétone renforcé par des fibres.
